# EUROPEAN PATENT SPECIFICATION

(11) **EP 0 631 733 B1**
(45) Date of publication and mention of the grant of the patent: **29.09.1999**
(21) Application number: 94110277.4
(22) Date of filing: 01.07.1994
(51) Int. Cl.: A23L 1/318

(54) **Enzymic agent for improving the tenderization of meat**
Enzym-Zubereitung zur Verbesserung der Zartheit von Fleisch
Agent enzymatique pour améliorer l'attendrissement des viandes

(30) Priority: 02.07.1993 JP 16445993
(43) Date of publication of application: 04.01.1995
(73) Proprietor: Ajinomoto Co., Inc., Tokyo 104 (JP)
(72) Inventor: Sakamoto, Hiroko, c/o Food Products Dev. Lab., Kawasaki-ku, Kawasaki-shi, Kanagawa-ken (JP); Kondo, Masaaki, c/o Food Products Dev. Lab., Kawasaki-ku, Kawasaki-shi, Kanagawa-ken (JP); Toba, Shigeru, c/o Food Products Dev. Lab., Kawasaki-ku, Kawasaki-shi, Kanagawa-ken (JP)
(74) Representative: Strehl Schübel-Hopf & Partner

(56) References cited:
- EP-A- 0 379 606
- JOURNAL OF AGRICULTURAL AND FOOD CHEMISTRY, vol.40, no.12, December 1992, WASHINGTON US pages 2364 - 2368 HIROSHI TAKAGI ET AL. 'Effects of an Alkaline Elastase from an Alkalophilic Bacillus Strain on the Tenderization of Beef Meat'

## Description

The present invention relates to a novel meat improving agent and a method for improving meat. More precisely, it relates to a novel meat improving agent to be used for improving meat, especially tough and stringy parts of meat, so as to increase the added value of meat and also to a method for improving meat.

### [Prior Art]

Meats of beef, pork, chicken, etc. include low-quality parts which are too stringy and tough to eat them as they are. The toughness of meat depends on hard proteins surrounding the muscular fibrous cortices of meat, especially collagen and elastin. To soften such tough and stringy meat, mechanical means for cutting strings of meat or for grinding meat as well as vegetable-derived proteases such as papain, bromelain, ficin, etc. have heretofore been employed.

However, since these enzymes decompose more muscular proteins than collagen and elastin having particular stereo-structures, they have the drawback in that the meat treated by them loses its elasticity, though being softened, to have a dry and crumbly taste or have a melt-like pasty taste while losing the original taste of meat.

Of proteases, elastase is highly specific to collagen and elastin and is therefore effective in improving the taste of tough meat (refer to Japanese Patent Application Laid-Open No. 3-224465). However, since the amounts of collagen and elastin in meat are not constant but vary, the quality of meat treated with elastase was not always constant but varied and, as the case may be, elastase often decomposed muscular proteins to worsen the taste of the meat treated therewith. Hence, elastase was defective in this point.

On the other hand, transglutaminase (hereinafter referred to as TG) is an enzyme which catalyzes the transacylation of the γ-carboxyamido group in the glutamine residue in peptide chains (refer to Japanese Patent Application Laid-Open No. 64-27471). Studies of producing shaped meats (refer to Japanese Patent Application Laid-Open No. 2-79956) and producing tofu (soybean curd) (refer to Japanese Patent Application Laid-Open No. 2-69155), using this enzyme, have been made. However, there is no report of disclosing a method of improving meat using this enzyme.

### Problems to be Solved by the Invention

The object of the present invention is to provide a meat improving agent which softens the low-quality, stringy and tough parts of meat when added in low amounts while preventing the meat from losing its elasticity and original taste and preventing it from having a dry and crumbly taste or having a pasty taste. The meat improving agent of the invention may improve the quality of meat almost uniformly, even though the kinds of meat vary, without worsening the original taste of meat. The object is also to provide a method for improving meat.

### Means for Solving the Problem

The present inventors assiduously studied so as to solve the above-mentioned problems and, as a result, have found that transglutaminase catalyzes the transacylation between the γ-carboxyamido group in the glutamine residue and various primary amines in proteins and peptide chains in meat to thereby form a cross-linked ε-(γ-Glu)-Lys bond when the primary amine in the protein is a lysine residue. On the basis of these findings, we have completed the present invention.

Specifically, the present invention provides (1) a meat improving agent containing one or more proteases and a transglutaminase and (2) a method for improving meat by treating meat with one or more proteases and a transglutaminase. Next, the present invention will be explained in detail

The kinds of meat to be treated according to the present invention are not specifically limited. In general, meats derived from beef cattle, pigs, chickens, sheep, horses, etc. may be used. In particular, stringy, low-quality meats as well as meats from aged useless cattle and useless hens are effectively treated according to the present invention.

The kinds of proteases to be employed in the present invention are not specifically defined. For example, employable are any of vegetable-derived proteases such as papain, bromelain, ficin, etc.; microorganism-derived proteases such as collagenase, satilysin, thermolysin, etc.; and animal-derived proteases such as collagenase, trypsin, cathepsin, etc. (Both microorganism-derived collagenase and animal-derived collagenase are known.) As the case may be, also employable are proteases produced by genetic recombination of animal-derived proteases.

In addition, other various proteases are also employable, such as endopeptidases that cut peptide bond chains at an inner site as well as exopeptidases that release amino acids from the terminal of peptide bond chains.

The present invention is an epoch-making one, as being applicable to ordinary proteases having a low substrate specificity. The invention will be explained in more detail, with reference to elastase and papain as examples.

Elastase is isolated from animal pancreases and also from vegetable, mold, actinomycetes (ray fungi) and bacteria (refer to Morihara, K. et al., (1965) J. Biol. Chem., 240, 3295-3304; Mandl, I. et al., (1960) Arch. Biochem. Biophys., 91, 47-53; Ozaki, H. et al., (1975) J. Biochem., 77, 171-180; Morihara, K. et al., (1967) Areh. Biochem. Biophys., 120, 68-78; Mandl, I. et al., (1962) Proc. Soc. Exp. Bio. Med., 109, 923-925).

Elastase of any kind may be employed in the present invention. Preferred is elastase derived from bacteria of alkalophilic Bacillus. Elastase derived from bacteria of alkalophilic Bacillus was found by Yamazaki et al. from the filtrate of culture of alkalophilic Bacillus sp. Ya-B (AJ 12619, BP-4728 (FERM P-12261) (refer to Tsai Y.C. et al., Biochem. Int., 7, 577-583 (1983)), and this is characterized by having an extremely high elastin-decomposing power as compared with other known elastases.

Elastase derived from bacteria of alkalophilic Bacillus may be produced by general cultivation methods (refer to Japanese Patent Application Laid-Open No. 3-224365). Needless-to-say, one produced by genetic recombination may also be used.

Various methods for measuring the activity of elastase have been reported. A colorimetric method using elastin-orcein as the substrate (refer to Sachar, L.A. et al., (1955) Proc. Soc. Exp. Biol. Med., 90, 323-326) was used in the present invention. According to the method, 20 mg of elastin-orcein (E1500, Sigma) are put in a mini-test tube provided with a screw cap and 2 ml of 50 mM NaHCO₃-Na₂CO₃ buffer (pH 10.5) and an appropriate amount of an enzyme solution are added thereto and reacted at 37°C while shaking. After one hour, one ml of a reaction-stopping liquid (0.7 M phosphoric buffer, pH 6.0) is added thereto, the substrate is removed by centrifugation, and the absorbance of the supernatant is measured at 590 nm. To determine the activity of the enzyme, the amount of the enzyme capable of decomposing a half of the total elastin-orcein added was measured to be 10 units.

Of proteases, various methods for measuring the activity of papain have been reported. A titration method using Na-benzoyl-L-arginine ethyl ester as the substrate (refer to E.L. Smith and M.J. Parker, (1958) J. Biol. Chem., 233, 1387) was used in the present invention. According to the method, the amount of the enzyme capable of decomposing one µmole/min of the substrate at pH of 6.2 and at 25°C was measured to be one unit.

To measure the activity of other proteases than elastase and papain, known methods may be employed.

According to the present invention, one or more proteases may be used singly or as combined. For instance, employable is a combination of elastase and papain.

On the other hand, the TG for use in the present invention is not specifically limited with respect to its origin, provided that it has transglutaminase activity. For instance, it includes TG derived from microorganisms such as those belonging to the genus Streptoverticillium (for details, refer to Japanese Patent Application Laid-Open No. 64-27471), TG derived from mammals such as guinea pigs (for details, refer to Japanese Patent Publication No. 1-50382), TG derived from fishes such as cod (refer to Seki, N. et al., Preprint of Lectures in the Autumn Meeting of the Japan Fisheries Society in 1988, page 167), TG to be obtained by biotechnology (refer to Japanese Patent Application Laid-Open No. 63-132000), etc.

Of these, however, advantageous is TG derived from microorganisms such as those belonging to the genus Streptoverticillium (for details refer to Japanese Patent Application Laid-Open No. 64-27471) since it may easily be produced by industrial-scale mass-production and since it may be used in the absence of calcium ions.

Various methods for measuring the activity of TG have been reported. In the present invention used was the hydroxamate method (refer to Japanese Patent Application Laid-Open No. 64-27441), in which the amount of the enzyme capable of producing one µmole/min of hydroxamic acid was measured to be one unit by which the enzyme activity was determined.

Next, the method for improving meat according to the present invention will be explained in detail hereunder. Protease and TG to be added to meat may be either powders or solutions thereof. One or more proteases may be used singly or combined.

The order for addition of protease(s) and TG is not specifically limited, and employable is any of (1) a method of first adding TG to meat and reacting them, followed by adding protease(s) thereto and reacting them; (2) a method of first adding protease(s) to meat and reacting them, followed by adding TG thereto and reacting them; and (3) a method of simultaneously adding protease(s) and TG to meat and reacting them.

However, in order to inhibit the decomposition of muscular proteins in meat, which is one theme of the present invention, more preferred are the method of first adding TG to meat and the method of simultaneously adding protease(s) and TG thereto.

To carry out the method of simultaneously adding TG and protease(s) to meat, it is recommended to use the meat improving agent containing protease(s) and TG of the present invention as the operation is simple.

In improving meat according to the present invention, the amount of TG to be used cannot be defined, as it varies depending on the amount of the muscular proteins existing in meat, the treating temperature, the treating time and the treating method. In general, however, it may be from 0.01 to 100 units, preferably from 0.1 to 20 units, per gram of meat. Needless-to-say, the amount is not limited within the defined range.

The amount of protease to be used may suitably be determined, depending on the kind of protease to be used, the amount of the hard proteins existing in meat, the treating temperature, the treating time and the treating method. For example, when elastase derived from bacteria of alkalophilic Bacillus is used, the amount thereof may be generally from 0.1 to 500 units, preferably from 1 to 200 units, per gram of meat. When papain is used, the amount thereof may be generally from 0.001 to 1 unit, preferably from 0.005 to 0.5 units, per gram of meat.

Needless-to-say, the above-mentioned amounts are not limitative.

Next, the meat improving agent to be used in the present invention will be referred to hereunder. The meat improving agent may be prepared in such a way that it contains generally from 10 to 100,000 units, preferably from 100 to 20,000 units, per gram of the agent, of TG. Needless-to-say, the above-mentioned ranges are not limitative but indicate embodiments of the present invention.

On the other hand, the content of protease(s) in the meat improving agent of the present invention varies, depending on the kind of proteases. For example, when elastase is used, the content thereof may be generally from 100 to 500,000 units, preferably from 1,000 to 200,000 units, per gram of the meat improving agent. When papain is used, the content thereof may generally be from 1 to 1,000 units, preferably from 5 to 500 units, per gram of the agent. For other proteases such as bromelain, etc., their contents may suitably be determined in consideration of their properties.

The improving agent of the present invention may optionally contain seasonings, phosphates, pH adjusting agents, colorants, etc. It may also contain, as a stabilizer and a vehicle, calcium chloride, bovine serum albumin, glycerol, dextrin, sodium citrate, etc. The enzyme agent of the present invention may be either powdery or liquid.

The amount of the improving agent of the present invention to be used for improving meat is not specifically limited but, in general, it may be such that (1) from 0.01 to 100 units, preferably from 0.1 to 20 units, per gram of meat, of TG are added to meat and (2) as protease(s), from 0.1 to 500 units, preferably from 1 to 200 units, per gram of meat, of elastase derived from bacteria of alkalophilic Bacillus and/or from 0.001 to 1 unit, preferably from 0.005 to 0.5 units, per gram of meat, of papain are added to meat.

For the practical use of the improving agent of the present invention so as to improve meat, various methods may be employed. For instance, the improving agent is sprayed or dusted over meat, or meat is dipped in a solution containing the improving agent or a solution containing the improving agent is injected into meat, immediately after slaughtering animals and before cooking meat.

When treating meat simultaneously with TG and protease(s) by the use of the meat improving agent of the present invention and when treating meat separately with TG and protease(s), it is recommended to age the treated meat.

The aging method is not specifically limited and depends on the kinds of the enzymes to be used and the amounts thereof. In general, when TG is first added to meat, then the treated meat may be ripened for 10 minutes to 14 days while cooling, for example, in a refrigerator or for 10 minutes to 24 hours at room temperature (about 25°C). Next, when the meat is treated with protease(s), the treated meat may be ripened for 10 minutes to 14 days while cooling, for example, in a refrigerator or for 10 minutes to 24 hours at room temperature (about 25°C).

When protease(s) and TG are simultaneously added to meat (this corresponding to the case of adding the meat improving agent of the present invention directly to meat), the treated meat may be aged for 10 minutes to 14 days while cooling, for example, in a refrigerator or for 10 minutes to 24 hours at room temperature (about 25°C).

Prior to the aging, if desired, the meat may be tumbled.

The enzyme-treated meat may be eaten, after it is cooked under heat by ordinary methods. The cooking methods and the cooking conditions are not limited. As examples, mentioned are such that the meat is cooked into steak or sauté or is grilled, roasted, stewed or fried. However, before the enzymes are deactivated during the cooking step, the enzymatic reaction may often be promoted and care shall be given to this point. Meat products to be obtained by heating and processing the enzyme-treated meats may be distributed in the market. Without heating, the enzyme-treated meats may be distributed in the market as chilled or frozen meats. Where chilled meats are distributed, it is necessary to well control the chilling temperatures and the distribution routes in order to prevent too rapid promotion of the enzymatic reaction causing deterioration of the quality of the meats.

### Example 1

1.5 kg of a round of beef imported from Australia were devided into three groups each weighing 500 g and treated according to the methods mentioned below. After the treatment, they were cut into pieces for steak, having a thickness of 1.2 cm and a weight of about 100 g. They were then grilled on a hot iron plate at 200°C for 4 minutes to be steak samples for sensory evaluation.
Group (1): Not treated (control).
Group (2): Elastase derived from bacteria of alkalophilic Bacillus was dissolved in 25 ml of city tap water. This was injected into the meat in an amount of 30 U, per gram of meat, of elastase, using an injection needle, by sticking the needle into the surface of the meat at various portions each to a determined depth. The meat was tumbled at 5°C for one hour and then allowed to stand at 5°C overnight.
Group (3): TG was dissolved in 25 ml of city tap water. This was injected into the meat in an amount of 2 U, per gram of meat, of TG, using an injection needle. The meat was tumbled at 5°C for one hour and then allowed to stand at 5°c overnight. Next, the meat was treated with elastase in the same manner as in the above-mentioned (2).

The results of sensory evaluation of these samples are shown in Table 1. Precisely, the steak samples for sensory evaluation were tested by 10 expert panelists. The evaluation was conducted according to the following five ranks. The table shows the average of the points given by 10 expert panelists.
- 2:: Strong.
- 1:: Slightly strong.
- 0:: Medium.
- -1:: slightly Weak.
- -2:: Weak.

For the total evaluation of the texture, the following 5 ranks are referred to:
- 2:: Good.
- 1:: Slightly Good.
- 0:: Medium.
- -1:: Slightly Bad.
- -2:: Bad.

**Table 1**

| Group | Concentration of TG (U/g of meat) | Concentration of Elastase (U/g of meat) | Toughness | Stringiness | Dry and crumbly texture | Pasty texture | Total preference of texture |
|---|---|---|---|---|---|---|---|
| 1 | 0 | 0 | 2 | 2 | -1 | -1 | -2 |
| 2 | 0 | 30 | -1 | -1 | 1 | 1 | 0 |
| 3 | 2 | 30 | -1 | -1 | -1 | -1 | 1.8 |

### Example 2

1.5 kg of a round of beef imported from Australia were devided into three groups each weighing 500 g and treated according to the methods mentioned below. After the treatment, they were cut into pieces for steak, having a thickness of 1.2 cm and a weight of about 100 g. They were then grilled on a hot iron plate at 200°C for 4 minutes to be steak samples for sensory evaluation.
Group (1): Not treated (control).
Group (2): Elastase derived from bacteria of alkalophilic Bacillus was dissolved in 25 ml of city tap water. This was injected into the meat in an amount of 30 U, per gram of meat, of elastase, using an injection needle, by sticking the needle into the surface of the meat at various portions each to a determined depth. The meat was tumbled at 5°C for one hour and then allowed to stand at 5°C overnight.
Group (3): A mixture comprising the above-mentioned elastase (in an amount of 30 U per gram of meat) and TG (in an amount of 2.0 U per gram of meat) was dissolved in 25 ml of city tap water. This was injected into the meat, using an injection needle. The meat was tumbled at 5°C for one hour and then allowed to stand at 5°C overnight.

Next, these meats were subjected to the same sensory test as in Example 1. The results are shown in Table 2.

**Table 2**

| Group | Concentration of TG (U/g of meat) | Concentration of Elastase (U/g of meat) | Toughness | Stringiness | Dry and crumbly texture | Pasty texture | Total preference of texture |
|---|---|---|---|---|---|---|---|
| 1 | 0 | 0 | 2 | 2 | -1 | -1 | -2 |
| 2 | 0 | 30 | -1 | -1 | 0.8 | 0.7 | -0.2 |
| 3 | 2 | 30 | -1 | -1 | -0.8 | -1 | 1.7 |

### Example 3

1.5 kg of a bound of beef imported from Australia were devided into three groups each weighing 500 g and treated according to the methods mentioned below. After the treatment, they were cut into pieces for steak, having a thickness of 1.2 cm and a weight of about 100 g. They were then grilled on a hot iron plate at 200°C for 4 minutes to be steak samples for sensory evaluation.
Group (1): Not treated (control).
Group (2): Papain was dissolved in 25 ml of city tap water. This was injected into the meat in an amount of 0.09 U, per gram of meat, of papain, using an injection needle, by sticking the needle into the surface of the meat at various portions each to a determined depth. The meat was tumbled at 5°C for one hour and then allowed to stand at 5°C overnight.
Group (3): TG was dissolved in 25 ml of city tap water. This was injected into the meat in an amount of 2.0 U, per gram of meat, of TG, using an injection needle. The meat was tumbled at 5°C for one hour and then allowed to stand at 5°C overnight. Next, the meat was treated with papain in the same manner as in the above-mentioned (2).

These meats were subjected to the same sensory test as in Example 1. The results are shown in Table 3.

**Table 3**

| Group | Concentration of TG (U/g of meat) | Concentration of Elastase (U/g of meat) | Toughness | Stringiness | Dry and crumbly texture | Pasty texture | Total preference of texture |
|---|---|---|---|---|---|---|---|
| 1 | 0 | 0 | 2 | 2 | -1 | -1 | -2 |
| 2 | 0 | 0.09 | -0.6 | -0.6 | 1.5 | 1.5 | -1 |
| 3 | 2 | 0.09 | -0.6 | -0.6 | -0.5 | -0.5 | 1.5 |

### Example 4

1.5 kg of a round of beef imported from Australia were devided into three groups each weighing 500 g and treated according to the methods mentioned below. After the treatment, they were cut into pieces for steak, having a thickness of 1.2 cm and a weight of about 100 g. They were then grilled on a hot iron plate at 200°C for 4 minutes to be steak samples for sensory evaluation.
Group (1): Not treated (control).
Group (2): A meat improving agent comprising 6,000 units, per gram of meat, of elastase derived from bacteria of alkalophilic Bacillus, 0.2 g of sodium tripolyphosphate and 0.7 g of dextrin was dissolved in 25 ml of city tap water. This was injected into the meat in an amount of 0.001 g per gram of meat (containing 6 units, per gram of meat, of elastase), using an injection needle, by sticking the needle into the surface of the meat at various portions each to a determined depth. The meat was tumbled at 5°C for one hour and then allowed to stand at 5°C overnight.
Group (3): A novel meat improving agent of the present invention comprising 4,000 units, per gram of meat, of TG, 6,000 units, per gram of meat, of elastase, 0.2 g of sodium tripolyphosphate and 0.7 g of dextrin was dissolved in 25 ml of city tap water. This was injected into the meat in an amount of 0.001 g per gram of meat (containing 6 units, per gram of meat, of elastase and 4 units, per gram of meat, of TG), using an injection needle, by sticking the needle into the surface of the meat at various portions each to a determined depth. The meat was tumbled at 5°C for one hour and then allowed to stand at 5°C overnight.

Next, these meats were subjected to the same sensory test as in Example 1. The results are shown in Table 4.

**Table 4**

| Group | Toughness | Stringiness | Dry and crumbly texture | Pasty texture | Total preference of texture |
|---|---|---|---|---|---|
| 1: Not treated (control) | 2 | 2 | -1 | -1 | -2 |
| 2: Treated with elastase-containing meat improving agent | -0.6 | -0.6 | -0.5 | -0.5 | 1.5 |
| 3: Treated with novel meat containing elastase and TGase | -1 | -1 | -1 | -1 | 1.8 |

In all Examples 1 to 4, the meats treated with only protease were softened but became dry and crumbly or pasty. In contrast thereto, the meats treated with protease along with TG became soft but not stringy. In addition, they did not become dry and crumbly or pasty and were all tasty.

### Advantage of the Invention

According to the present invention, where tough and stringy parts of meat are treated with TG along with protease(s) such as elastase derived from bacteria of alkalophilic Bacillus, they become soft and are not stringy. By the treatment, meat is not made dry and crumbly or pasty. According to the present invention, therefore, meats or processed meat products with good texture are obtained.

## Claims

1. A meat improving agent containing one or more proteases and a transglutaminase.

2. The meat improving agent as claimed in Claim 1, in which the protease is an elastase derived from the genus Bacillus.

3. A method for improving meat, in which a meat improving agent as claimed in Claim 1 or 2 is applied to meat.

4. A method for improving meat, in which one or more proteases and a transglutaminase are applied to meat.

5. The method for improving meat as claimed in Claim 4, in which the protease is an elastase derived from the genus Bacillus.

## Patentansprüche

1. Mittel zur Verbesserung von Fleisch, enthaltend eine oder mehrere Proteasen und eine Transglutaminase.

2. Mittel zur Verbesserung von Fleisch gemäß Anspruch 1, worin die Protease eine von der Gattung Bacillus abgeleitete Elastase ist.

3. Verfahren zur Verbesserung von Fleisch, wobei ein Mittel zur Verbesserung von Fleisch gemäß Anspruch 1 oder 2 auf Fleisch aufgebracht wird.

4. Verfahren zur Verbesserung von Fleisch, wobei eine oder mehrere Proteasen und eine Transglutaminase auf Fleisch aufgebracht werden.

5. Verfahren zur Verbesserung von Fleisch gemäß Anspruch 4, wobei die Protease eine von der Gattung Bacillus abgeleitete Elastase ist.

## Revendications

1. Agent d'amélioration de la viande contenant une ou plusieurs protéases et une transglutaminase.

2. Agent d'amélioration de la viande selon la revendication 1, dans lequel la protéase est une élastase dérivée du genre *Bacillus*.

3. Procédé d'amélioration de la viande, dans lequel on applique à la viande un agent d'amélioration de la viande selon la revendication 1 ou 2.

4. Procédé d¹amélioration de la viande, dans lequel on applique à la viande une ou plusieurs protéases et une transglutaminase.

5. Procédé d'amélioration de la viande selon la revendication 4, dans lequel la protéase est une élastase dérivée du genre *Bacillus*.
